# FASCICULE DE BREVET EUROPEEN

(11) **EP 3 548 196 B1**
(45) Date de publication et mention de la délivrance du brevet: **13.05.2020**
(21) Numéro de dépôt: 18808376.0
(22) Date de dépôt: 03.12.2018
(51) Int. Cl.: B21C 37/15, B21D 9/04, B21D 35/00, B29C 53/08, F16L 9/18, F16L 43/00

(54) **CANALISATION TUBULAIRE LONGITUDINALE COMPORTANT UN ORGANE INTERCALAIRE ET PROCEDES DE MONTAGE ET DE CINTRAGE D'UNE TELLE CANALISATION**
LANGE ROHRLEITUNG MIT EINEM TRENNELEMENT UND VERFAHREN ZUM MONTIEREN UND BIEGEN SOLCH EINER ROHRLEITUNG
LONG TUBULAR PIPE COMPRISING A SEPARATING MEMBER AND METHODS FOR MOUNTING AND BENDING SUCH A PIPE

(30) Priorité: 13.12.2017 FR 1762096
(43) Date de publication de la demande: 09.10.2019
(73) Titulaire: Stelia Aerospace, 17300 Rochefort (FR)
(72) Inventeur: PERHERIN, Daniel, 44600 Saint Nazaire (FR)
(74) Mandataire: Argyma
(86) Numéro de dépôt international: PCT/EP2018/083370
(87) Numéro de publication internationale: WO 2019/115275

(56) Documents cités:
- WO-A1-2005/061142
- WO-A1-2015/186147
- DE-A1-102011 105 279
- US-A- 5 497 809

## Description

### DOMAINE TECHNIQUE GENERAL ET ART ANTERIEUR

La présente invention concerne le domaine des canalisations pour le transport d'un fluide et, plus particulièrement, le transport de fluide dans un aéronef.

De manière connue, on connaît dans l'art antérieur une canalisation « double peau » ou « doublée » qui comporte un tube externe dans lequel est monté un tube interne de transport de fluide. Le tube interne permet, par exemple, de conduire un flux de carburant tandis que le tube externe forme une enveloppe de protection qui permet, d'une part, de protéger le tube interne en cas de choc et, d'autre part, de collecter le carburant dans le tube externe en cas de fuite du tube interne. Ce type de canalisation contribue également au confinement des vapeurs de carburant.

La fabrication d'une telle canalisation tubulaire est complexe étant donné qu'il est nécessaire que le tube interne soit positionné de manière coaxiale avec le tube externe. Par ailleurs, il est nécessaire d'éviter que les tubes entrent en contact lors de la fabrication afin de créer des zones de faiblesse ou d'obstruction au passage du carburant. Des difficultés importantes apparaissent pour la fabrication d'une canalisation de forme incurvée.

De manière classique, pour obtenir une canalisation incurvée, on réalise une étape de cintrage d'une canalisation longitudinale dans laquelle un organe intercalaire a été préalablement introduit entre la surface intérieure du tube externe et la surface extérieure du tube interne. L'organe intercalaire remplit une fonction d'interface entre le tube interne et le tube externe lors du cintrage et permet d'éviter tout contact entre lesdits tubes.

En référence aux figures 1 et 2, on connaît par la demande de brevet US5497809 une canalisation tubulaire 101 comprenant un tube externe 102 dans lequel est monté un tube interne 104, un organe intercalaire longitudinal 103 est positionné entre ledit tube externe 102 et ledit tube interne 104 préalablement au cintrage de la canalisation tubulaire 101. L'organe intercalaire 103 comporte des moyens de passage 130 configurés pour permettre une circulation longitudinale de fluide entre le tube interne 104 et le tube externe 102. Selon une forme de réalisation de la demande de brevet US5497809, en référence à la figure 2, l'organe intercalaire 103 comporte un premier bord longitudinal 131a et un deuxième bord longitudinal 131b délimitant entre eux une fente longitudinale F afin de faciliter le montage de l'organe intercalaire 103 à la périphérie du tube interne 104. Du fait de la fente longitudinale F, le diamètre intérieur de l'organe intercalaire 103 est plus grand que le diamètre extérieur du tube interne 104, ce qui peut entraîner un déplacement de l'organe intercalaire 103 lors du montage du tube externe 102. Aussi, lors du cintrage, il existe un risque que l'organe intercalaire 103 ne soit pas correctement positionné, ce qui peut conduire à des défauts de cintrage (plis, ovalisation, etc.). En outre, l'organe intercalaire 103 est susceptible de se déplacer dans la canalisation 101 lors de la manipulation de ladite canalisation 101, ce qui peut affecter le positionnement du tube interne 104 dans le tube externe 102 et créer des zones de faiblesse. L'organe intercalaire 103 peut être maintenu en position sur le tube interne 104 de manière manuelle par un opérateur mais cette manipulation est peu pratique. Aussi, pour maintenir l'organe intercalaire 103 en position, un élément de serrage rapporté est positionné à la périphérie de l'organe intercalaire 103. Un tel élément de serrage augmente la durée de mise en place de l'organe intercalaire 103 et a une influence lors du cintrage.

De plus, un tel organe intercalaire 103 présente des limitations pour le cintrage d'une canalisation 101 en matériau plastique double peau, c'est-à-dire, comportant un tube interne 104 en matériau plastique et un tube externe 102 en matériau plastique. En effet, pour permettre un cintrage optimal d'une canalisation en matériau plastique double peau 101, il est connu de chauffer préalablement la portion à cintrer. L'utilisation d'un organe intercalaire 103 tel que présenté par la demande de brevet US5497809 peut perturber le chauffage et ainsi empêcher que le tube interne 104 soit suffisamment chauffé. En effet, le chauffage du tube interne 104 au niveau de la fente de montage F peut ne pas être suffisant. Aussi, lors du cintrage, le tube interne 104 peut se déformer de manière non désirée et engendrer des défauts de cintrage (plis, ovalisation, etc.).

L'invention a donc pour but de remédier à ces inconvénients en proposant un nouveau type de canalisation à double peau pouvant être cintrée avec un risque de défaut réduit, qui soit simple à assembler et pratique à cintrer.

Bien que l'invention soit née à l'origine pour une canalisation en matériau plastique, elle s'applique également à une canalisation métallique, en particulier, en aluminium.

### PRESENTATION GENERALE DE L'INVENTION

A cet effet, l'invention concerne une canalisation tubulaire longitudinale comprenant un tube externe de transport de fluide ayant une portion cintrée externe, un tube interne de transport de fluide, monté dans le tube externe, ayant une portion cintrée interne sensiblement coaxiale à la portion cintrée externe et un organe intercalaire, comportant un corps longitudinal flexible, qui est positionné entre la portion cintrée interne et la portion cintrée externe et qui s'étend de manière coaxiale auxdites portions cintrées, l'organe intercalaire étant configuré pour transmettre des efforts de cintrage entre ledit tube externe et ledit tube interne lorsque ledit tube externe est cintré, l'organe intercalaire comportant des moyens de passage de fluide longitudinal entre le tube interne et le tube externe, l'organe intercalaire comportant un premier bord et un deuxième bord délimitant entre eux une fente de montage.

La canalisation est remarquable en ce que le premier bord et le deuxième bord comprennent respectivement au moins un premier élément de connexion et au moins un deuxième élément de connexion configurés pour coopérer mécaniquement ensemble à la périphérie extérieure du tube interne.

Grâce à l'invention, l'organe intercalaire peut être verrouillé de manière pratique à la périphérie extérieure du tube interne. Il n'est avantageusement pas nécessaire de recourir à un élément de serrage rapporté comme dans l'art antérieur. L'utilisation d'un tel organe intercalaire permet d'éviter tout déplacement indésirable susceptible d'engendrer des défauts de cintrage. Enfin, lors du chauffage, les bords sont continus, ce qui permet de réaliser un chauffage homogène, garantissant des conditions optimales de cintrage. L'organe intercalaire permet d'assurer une conduction thermique homogène entre le tube externe et le tube interne sans nécessiter des moyens de chauffage particuliers. L'organe intercalaire peut être, d'une part, positionné de manière pratique grâce à la fente de montage en position déverrouillée. D'autre part, l'organe intercalaire est avantageusement continu à la surface extérieure du tube interne en position verrouillée. Ainsi, l'organe intercalaire possède les avantages d'un organe intercalaire périphérique tubulaire tout en ayant les avantages d'un organe intercalaire ayant une fente pour faciliter son montage.

De manière préférée, l'épaisseur de l'organe intercalaire est constante à la périphérie du tube interne. Le chauffage est ainsi homogène à la périphérie du tube interne.

Selon un aspect préféré, le tube interne et le tube externe ont chacun une section circulaire.

De préférence, le tube interne et le tube externe sont réalisés en un matériau plastique. L'utilisation d'un tel organe intercalaire est avantageuse pour des tubes en matériau plastique étant donné que le risque de défaut de cintrage est plus élevé. Comme le chauffage est homogène et régulier à la périphérie du tube interne du fait de la conduction thermique de l'organe intercalaire, le cintrage est optimal.

De préférence, l'organe intercalaire comportant une face intérieure et une face extérieure opposée à la face intérieure, le premier élément de connexion et le deuxième élément de connexion sont formés sur des faces opposées.

Selon un aspect préféré, le premier élément de connexion comporte une première partie creuse et une première partie saillante tandis que le deuxième élément de connexion comporte une deuxième partie creuse et une deuxième partie saillante qui sont adaptées pour coopérer respectivement avec la première partie saillante et la première partie creuse du premier élément de connexion. De tels éléments de connexion permettent de réaliser une rétention périphérique par simple coopération mécanique. De manière avantageuse, les éléments de connexion ont des formes complémentaires de manière à ce que l'organe intercalaire possède une épaisseur constante à la périphérie du tube interne. De manière avantageuse, chaque élément de connexion se présente sous la forme d'une languette.

De préférence, les parties saillantes de chaque élément de connexion s'étendent respectivement aux extrémités libres des bords. Ainsi, elles peuvent être retenues l'une avec l'autre lors du verrouillage de l'organe intercalaire sans créer de surépaisseur.

De manière préférée, le premier élément de connexion s'étend sur toute la longueur du premier bord. De préférence aussi, le deuxième élément de connexion s'étend sur toute la longueur du deuxième bord ce qui permet de réaliser une fermeture continue de la fente de montage.

De manière alternative, le premier bord et le deuxième bord comprennent respectivement une pluralité de premiers éléments de connexion et une pluralité de deuxièmes éléments de connexion configurés pour coopérer mécaniquement ensemble à la périphérie extérieure du tube interne. De préférence, les premiers éléments de connexion et les deuxièmes éléments de connexion coopèrent ensemble par emboitement du type mâle/femelle. De préférence, les premiers éléments de connexion sont répartis sur la longueur du premier bord de manière à former une pluralité de points de connexion élémentaires. De préférence encore, l'organe intercalaire possède une épaisseur constante.

De manière préférée, les bords sont longitudinaux, de préférence, rectilignes. De tels bords longitudinaux permettent de définir une fente de montage qui est longitudinale, ce qui facilite la mise en place de l'organe intercalaire sur une portion à cintrer du tube interne.

De préférence, les moyens de passage de fluide se présentent sous la forme d'orifices longitudinaux. Ainsi, le fluide est guidé à l'intérieur de l'organe intercalaire en cas de fuite, ce qui n'impacte pas l'intercalaire avec un tube interne ou un tube externe. Selon un aspect préféré, les moyens de passage de fluide sont répartis de manière égale à la périphérie extérieure du tube interne.

L'invention concerne également un procédé de montage d'une canalisation tubulaire longitudinale telle que présentée précédemment, le procédé comprenant :
- une étape de positionnement d'un organe intercalaire sur une portion à cintrer du tube interne, l'organe intercalaire étant à l'état déverrouillé,
- une étape de coopération du premier élément de connexion avec le deuxième élément de connexion de manière à verrouiller de l'organe intercalaire sur le tube interne et
- une étape d'insertion du tube interne associé à l'organe intercalaire dans le tube externe.

Grâce au procédé de montage selon l'invention, l'organe intercalaire est positionné de manière rapide et précise par un opérateur sur une portion à cintrer, le risque de défaut de positionnement est ainsi limité.

L'invention concerne en outre un procédé de cintrage d'une canalisation tubulaire longitudinale telle que présentée précédemment, la canalisation tubulaire longitudinale comportant une portion à cintrer dans laquelle est positionné un organe intercalaire entre le tube interne et le tube externe, le procédé comportant :
- une étape de chauffage de la portion à cintrer de la canalisation tubulaire et
- une étape de déformation de la portion à cintrer afin d'incurver la canalisation tubulaire longitudinale, l'organe intercalaire transmettant des efforts de cintrage entre ledit tube externe et ledit tube interne lorsque ledit tube externe est cintré.

Une fois verrouillé, l'organe intercalaire possède une surface continue à la périphérie du tube interne. Lors du chauffage de la canalisation tubulaire, le tube externe est chauffé. Par conduction thermique, l'organe intercalaire est chauffé et chauffe, par conduction thermique, le tube interne. L'absence de fente de montage, c'est-à-dire de discontinuité, permet de réaliser une conduction thermique homogène lors du chauffage.

### PRESENTATION DES FIGURES

L'invention sera mieux comprise à la lecture de la description qui va suivre, donnée uniquement à titre d'exemple, et se référant aux dessins annexés sur lesquels :

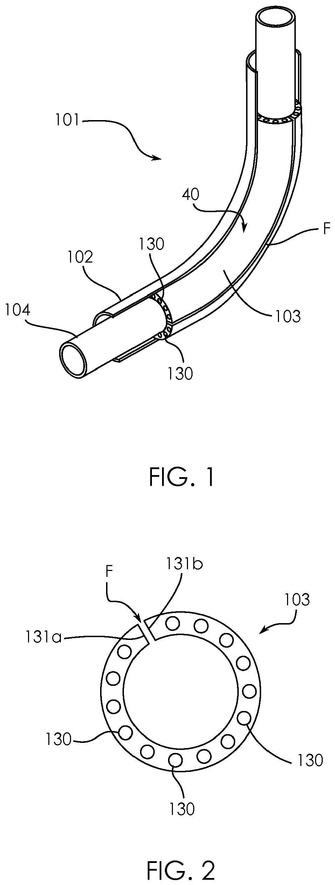

- la figure 1 est une représentation schématique en perspective d'une canalisation tubulaire incurvée avec un organe intercalaire selon l'art antérieur,
- la figure 2 est une représentation schématique en coupe transversale d'un organe intercalaire selon l'art antérieur,
- la figure 3 est une représentation schématique en perspective d'une canalisation tubulaire incurvée avec un organe intercalaire selon une forme de réalisation de l'invention,
- la figure 4 est une représentation en coupe longitudinale d'une canalisation tubulaire avant cintrage,
- la figure 5 est une représentation schématique en coupe transversale à plat d'un organe intercalaire selon une forme de réalisation de l'invention,
- la figure 6 est une représentation rapprochée d'une extrémité de l'organe intercalaire de la figure 5,
- la figure 7 est une représentation schématique du montage de l'organe intercalaire de la figure 5 sur un tube interne,
- la figure 8 est une représentation schématique de l'organe intercalaire monté sur le tube interne,
- la figure 9 est une représentation schématique du montage d'un tube externe extérieurement à l'organe intercalaire monté sur le tube interne,
- la figure 10 est une représentation schématique d'une étape de chauffage de la canalisation tubulaire et
- la figure 11 est une autre forme de réalisation d'un organe intercalaire.

Il faut noter que les figures exposent l'invention de manière détaillée pour mettre en œuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

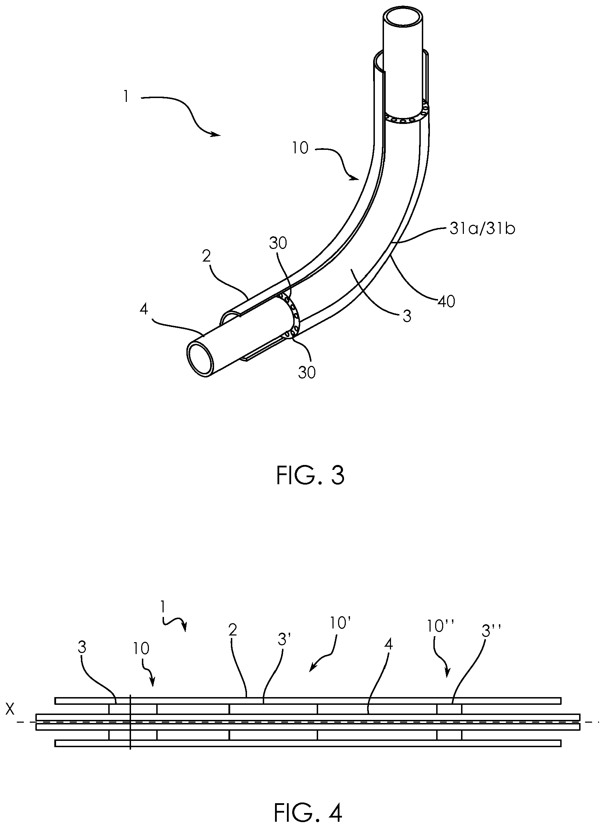

L'invention va être présentée pour une canalisation tubulaire longitudinale 1 comprenant au moins une portion cintrée 10 comme illustré à la figure 3.

La canalisation tubulaire 1 comporte un tube externe 2 de transport de fluide ayant une portion cintrée externe 20, un tube interne 4 de transport de fluide, monté dans le tube externe 2, ayant une portion cintrée interne 40 sensiblement coaxiale à la portion cintrée externe 20 et un organe intercalaire 3 qui est positionné entre la portion cintrée interne 40 et la portion cintrée externe 20 et s'étendant de manière coaxiale auxdites portions cintrées 20, 40.

De manière préférée, la canalisation tubulaire 1 est en matériau plastique, c'est-à-dire, le tube externe 2 et le tube interne 4 sont réalisés en matériau plastique, ce qui permet de limiter la masse de la canalisation tubulaire 1. Néanmoins, il va de soi que l'invention s'applique également à une canalisation tubulaire 1 en matériau métallique.

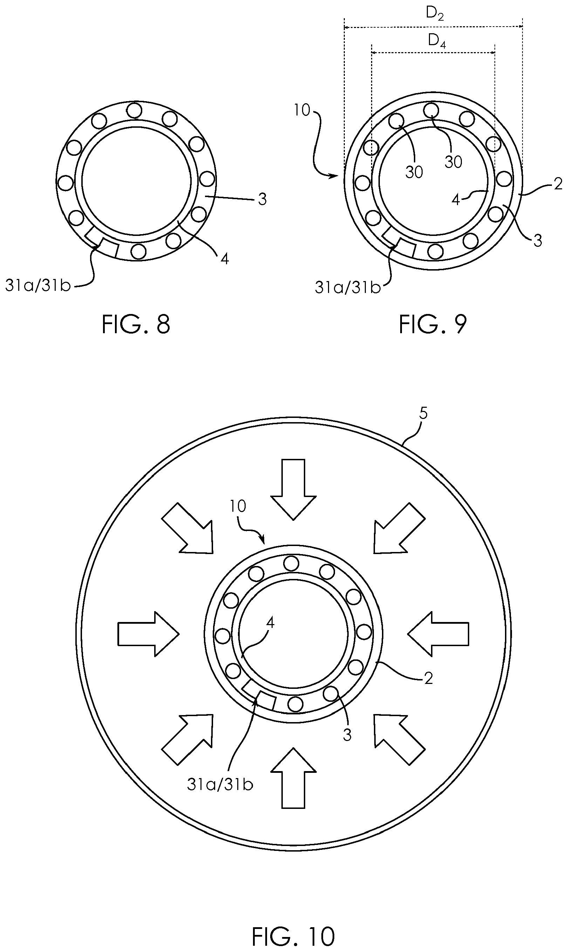

Dans cet exemple, en référence à la figure 4 représentant la canalisation tubulaire 1 préalablement à son cintrage, la canalisation tubulaire 1 s'étend longitudinalement selon un axe X et comprend un tube longitudinal externe 2 et un tube longitudinal interne 4 monté dans ledit tube longitudinal externe 2. En condition d'utilisation, les tubes 2, 4 s'étendent coaxialement et sont écartés l'un de l'autre d'un jeu fonctionnel. De manière préférée, chaque tube 2, 4 possède une section circulaire. A titre d'exemple, en référence à la figure 9, le tube externe 2 possède une épaisseur de l'ordre de 1 mm et un diamètre intérieur D2 de l'ordre de 19 mm tandis que le tube interne 4 possède une épaisseur de l'ordre de 1 mm et un diamètre extérieur D4 de l'ordre de 13 mm de manière à définir un jeu fonctionnel inférieur à 6 mm. En pratique, le tube externe 2 est plus court que le tube interne 4 afin que le tube interne 4 s'étende en saillie depuis chaque extrémité du tube externe 2 comme illustré à la figure 4.

Selon l'invention, en référence à la figure 4, l'organe intercalaire 3 est positionné entre le tube externe 2 et le tube interne 4 et est configuré pour transmettre des forces de cintrage entre ledit tube externe 2 et ledit tube interne 4 lorsque ledit tube externe 2 est cintré. Ainsi, comme illustré à la figure 3, après cintrage, l'organe intercalaire 3 est positionné entre la portion cintrée interne 40 et la portion cintrée externe 20 et s'étendant de manière coaxiale auxdites portions cintrées 20, 40. Dans l'exemple de la figure 4, la canalisation tubulaire 1 comporte trois organes d'intercalaire 3, 3', 3" afin de former trois portions à cintrer 10, 10', 10".

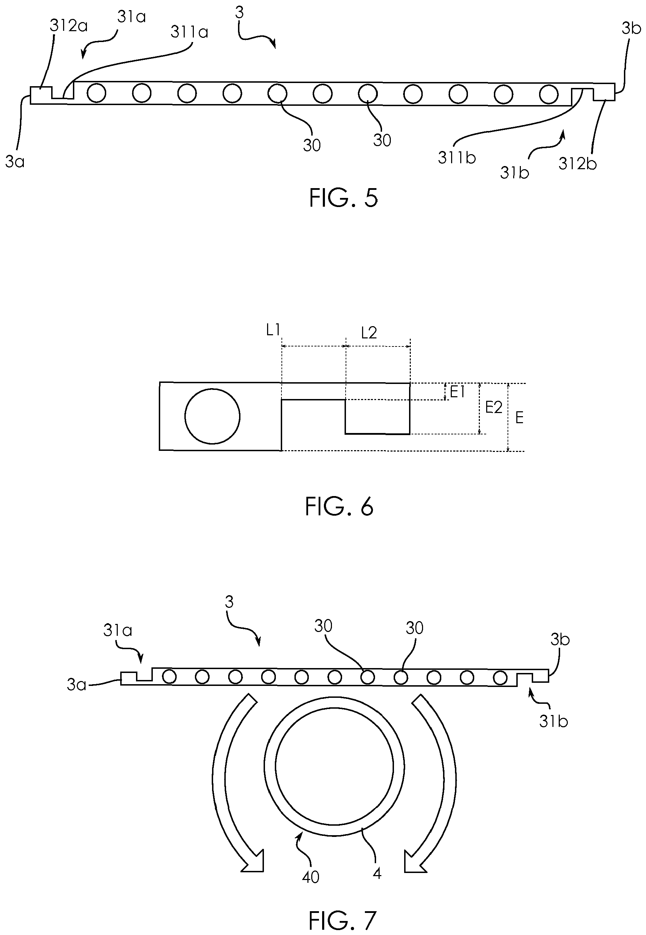

Comme illustré à la figure 4, l'organe intercalaire 3 comporte un corps longitudinal dont la longueur est définie selon la direction X. L'organe intercalaire 3 possède un corps en matériau flexible de manière à pouvoir être enroulé à la périphérie extérieure du tube interne 4. De manière préférée, l'organe intercalaire 3 s'étend de manière plane, comme illustré à la figure 5, et est enroulé lors de son utilisation. De manière avantageuse, l'organe intercalaire 3 est simple à former par découpage dans un rouleau de matériau flexible. Dans cet exemple, l'organe intercalaire 3 possède une épaisseur comprise entre 3,1 mm et 3,3 mm. L'organe intercalaire 3 est de réalisé en élastomère, de préférence, en silicone, fluorosilicone, élastomère fluoré, élastomère perfluoré. L'utilisation d'un élastomère est avantageuse étant donné qu'un tel matériau bénéficie d'un allongement à la rupture au moins deux fois supérieur à celui du Téflon. Autrement dit, l'organe intercalaire 3 permet de réaliser des cintrages importants de manière pratique. En outre, il permet d'épouser la forme du tube interne 4 pour être en contact permanent avec ce dernier pour le chauffer de manière efficace et le protéger lors du cintrage.

En référence à la figure 5, l'organe intercalaire 3 comporte des moyens de passage de fluide 30 entre le tube interne 4 et le tube externe 2 selon la direction longitudinale. Ainsi, en cas de fuite du fluide transporté par le tube interne 4, le fluide est conduit de manière confinée dans la canalisation longitudinale 1 entre le tube interne 4 et le tube externe 2. Dans cet exemple, les moyens de passage de fluide 30 se présentent sous la forme d'orifices traversants mais il va de soi que d'autres formes de réalisation pourraient convenir, notamment, des créneaux internes formés en regard du tube interne 4, des créneaux externes formés en regard du tube externe 2, des canules et autres.

Comme illustré aux figures 5 et 6, l'organe intercalaire 3 comporte un premier bord longitudinal 3a et un deuxième bord longitudinal 3b délimitant entre eux une fente longitudinale de montage permettent de faciliter l'enroulement de l'organe intercalaire 3 autour du tube interne 4. De manière analogue à l'art antérieur, une telle fente longitudinale de montage permet de mettre en place de l'organe intercalaire 3 de manière précise sur une portion à cintrer 40 du tube interne 4.

Dans cet exemple, la fente de montage est longitudinale mais il va de soi qu'elle pourrait être inclinée, elliptique, etc., l'important étant que la fente de montage permette d'offrir un jeu radial pour le montage de l'organe intercalaire 3 sur le tube interne 4. L'organe intercalaire 3 ne doit pas ainsi être nécessairement coulissé le long du tube interne 4 lors du montage.

Selon l'invention, en référence aux figures 5 à 7, le premier bord longitudinal 3a et le deuxième bord longitudinal 3b comprennent respectivement un premier élément de connexion 31a et un deuxième élément de connexion 31b configurés pour coopérer mécaniquement ensemble à la périphérie extérieure du tube interne 4. Autrement dit, l'organe intercalaire 3 évolue entre un état déverrouillé, dans lequel les éléments de connexion 31a, 31b ne coopèrent pas et les bords 3a, 3b sont écartés pour ménager une fente de montage, et un état verrouillé, dans lequel les éléments de connexion 31a, 31b coopèrent et les bords 3a, 3b sont en contact de manière à interdire tout déplacement sur l'organe intercalaire 3 sur le tube interne 4. En outre, l'organe intercalaire 3 s'étend de manière continue à la périphérie du tube interne 4, ce qui permet d'améliorer le transfert thermique comme cela sera présenté par la suite.

Comme illustré aux figures 5 et 6, les éléments de connexion 31a, 31b sont configurés pour coopérer de manière mécanique par emboitement, en particulier, par complémentarité de formes. En position verrouillée, les éléments de connexion 31a, 31b sont alignés radialement.

De manière avantageuse, comme illustré à la figure 5, l'organe intercalaire 3 est symétrique pour être monté sur un tube interne 4 sans tenir compte de l'orientation de l'organe intercalaire 3. Une telle caractéristique permet, d'une part, d'accélérer le montage de l'organe intercalaire 3 et, d'autre part, d'éviter un montage incorrect qui imposerait des manipulations inutiles du tube interne 4, augmentant ainsi le risque d'endommagement. En référence à la figure 5, le premier élément de connexion 31a est formé à l'extrémité gauche de la face supérieure tandis que le deuxième élément de connexion 31b est formé à l'extrémité droite de la face inférieure.

Chaque élément de connexion 31a, 31b se présente, dans cet exemple, sous la forme d'une languette mais il va de soi que d'autres formes pourraient convenir pour ménager une fente de montage. En référence, à la figure 5, le premier élément de connexion 31a comporte une première partie creuse 311a et une première partie saillante 312a tandis que le deuxième élément de connexion 31b comporte une deuxième partie creuse 311b et une deuxième partie saillante 312b qui sont adaptées pour coopérer respectivement avec la première partie saillante 312a et la première partie creuse 311a du premier élément de connexion 31a. La partie saillante 312a, 312b de chaque élément de connexion 31a, 31b s'étend à une extrémité libre de manière à permettre la rétention. Chaque élément de connexion 31a, 31b s'étend sur toute la longueur du bord 3a, 3b de manière à permettre une fermeture continue de la fente de montage.

A titre d'exemple, en référence à la figure 6, chaque partie creuse 311a, 311b possède une épaisseur E1 comprise entre 1 mm et 1,6 mm une largeur L1 comprise entre 2 mm et 3 mm. De manière analogue, chaque partie saillante 312a, 312b possède une épaisseur E2 comprise entre 1,5 mm et 2,3 mm et une largeur L2 comprise entre 2 mm et 3 mm. L'épaisseur E2 est supérieure à l'épaisseur E1. Pour un élément de connexion 31a, 31b, sa partie creuse 311a, 311b est adjacente à sa partie saillante 312a, 312b. De manière préférée, les largeurs L1, L2 sont égales et la somme des épaisseurs E1 et E2 est égale à l'épaisseur totale E, ici comprise entre 3,1 mm et 3,3 mm, pour que l'organe intercalaire 3 possède une épaisseur continue et constante à la périphérie du tube interne 4 en position verrouillée. Autrement dit, en position verrouillée, la section de l'organe intercalaire 3 se présente sous la forme d'un anneau comme illustré à la figure 8.

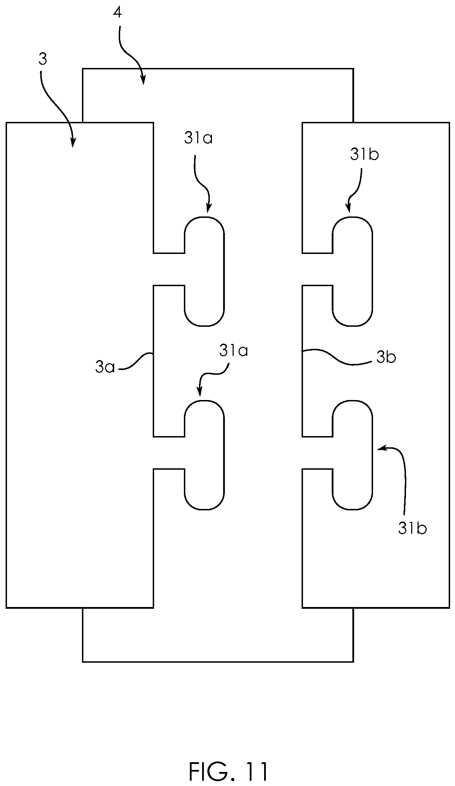

Selon une autre forme de réalisation, en référence à la figure 11, le premier bord 3a et le deuxième bord 3b comprennent respectivement une pluralité de premiers éléments de connexion 31a et une pluralité de deuxièmes éléments de connexion 31b configurés pour coopérer mécaniquement ensemble à la périphérie extérieure du tube interne 104. Les premiers éléments de connexion 31a et les deuxièmes éléments de connexion 31b coopèrent ensemble par emboitement du type mâle/femelle. De préférence encore, l'organe intercalaire 3 possède une épaisseur constante, les éléments de connexion 31a, 31b étant réalisés par découpage d'un corps d'épaisseur constante, ce qui diminue le coût et facilite la fabrication. Comme illustré à la figure 11, chaque premier élément de connexion 31a se présente sous la forme d'une languette, ici en forme de queue d'aronde, qui coopère avec chaque deuxième élément de connexion 31b se présentant sous la forme d'une encoche de forme complémentaire à la languette. Autrement dit, chaque premier élément de connexion 31a est connecté à un deuxième élément de connexion 31b de manière analogue à un puzzle.

De préférence, les premiers éléments de connexion 31a sont répartis sur la longueur du premier bord 3a. Il en va de même des deuxièmes éléments de connexion 31b répartis sur la longueur du premier bord 3a. Ainsi, la fermeture est réalisée par une pluralité de points de connexion élémentaires. Une telle fermeture est simple à réaliser par un opérateur lors du montage d'un organe intercalaire 3 sur le tube interne 4.

Un exemple de mise en œuvre de l'invention va être présenté en référence aux figures 7 à 10 pour le cintrage d'une canalisation tubulaire 1 en matériau plastique.

Comme illustré à la figure 7, chaque organe intercalaire 3 se présente sous la forme d'une bande plane qui est incurvée autour de la surface extérieure du tube interne 4 afin de faire coopérer les élément de connexion 31a, 31b et les verrouiller ensemble. La deuxième partie creuse 311b et la deuxième partie saillante 312b du deuxième organe de connexion 31b coopèrent respectivement avec la première partie saillante 312a et la première partie creuse 311a du premier élément de connexion 31a pour permettre une rétention. La coopération est radiale entre les organes de connexion 31a, 31b comme illustré aux figures 8 à 10. L'organe intercalaire 3 est en contact intime avec la surface extérieure du tube interne 4, ce qui garantit une conduction thermique optimale lors du chauffage et une transmission optimale des efforts lors du cintrage.

De manière avantageuse, le positionnement de l'organe intercalaire 3 sur la portion à cintrer 40 est précis et n'engendre pas d'efforts sur l'organe intercalaire 3 ou le tube interne 4, ce qui limite le risque d'endommagement. Cela est avantageux et pratique par comparaison à un montage d'un organe intercalaire tubulaire qui serait glissé le long du tube interne 4.

Suite à la coopération, comme illustré à la figure 8, l'organe intercalaire 3 possède une épaisseur continue à la périphérie du tube interne 4 en position verrouillée. Ainsi, le tube interne 4 est protégé de manière uniforme en vue du cintrage.

De manière préférée, plusieurs organes d'intercalaire 3 sont positionnés à différentes positions longitudinales du tube interne 4 afin de correspondre aux portions longitudinales à cintrer. De préférence, la longueur longitudinale de chaque organe intercalaire 3 est choisie en fonction du cintrage à réaliser pour une portion longitudinale déterminée. Dans cet exemple, en référence à la figure 4, la canalisation tubulaire 1 comporte trois organes d'intercalaire 3, 3', 3" afin de former trois portions à cintrer 10, 10', 10".

En référence à la figure 9, le tube interne 4 sur lequel sont montés les organes d'intercalaire 3, 3', 3" est introduit dans la cavité intérieure du tube externe 2 de manière à ce que chaque organe intercalaire 3, 3', 3" s'étende entre le tube interne 4 et le tube externe 2. Pour faciliter le montage, le tube interne 4 associé aux organes d'intercalaire 3, 3', 3" peut être refroidi à une température inférieure à -10°C afin de faciliter son montage avec le tube externe 2 qui demeure à la température ambiante. Ainsi, comme illustré à la figure 9, le tube interne 4, le tube externe 2 et l'organe intercalaire 3 sont coaxiaux.

Préalablement à l'étape de déformation mécanique de la canalisation tubulaire 1, chaque portion à cintrer 10, 10', 10" est chauffée de manière à faciliter sa déformation. De manière préférée, des moyens de chauffage 5, notamment par infrarouge, chauffent de manière périphérique et extérieure la portion à cintrer 10 comme illustré à la figure 10. En pratique, les moyens de chauffage 5 émettent un rayonnement infrarouge qui ne permet pas de chauffer des épaisseurs imposantes de canalisation à des températures élevées. Aussi, il est important de bénéficier d'une bonne conduction thermique pour permettre de chauffer le tube interne 4. Une conduction thermique optimale est par ailleurs souhaitée pour tout type de chauffage.

Ainsi, la température du tube extérieur 2 augmente progressivement, ce qui chauffe, par conduction thermique, l'organe intercalaire 3. Comme l'organe intercalaire 3 possède une épaisseur continue à la périphérie du tube interne 4, la conduction thermique par l'organe intercalaire 3 est homogène, ce qui permet de chauffer de manière homogène le tube interne 4. Autrement dit, grâce à l'invention, le tube interne 4 est chauffé de manière optimale en utilisant des moyens de chauffage 5 conventionnels.

La portion à cintrer 10 de la canalisation tubulaire 1 peut ensuite être cintrée par une machine de cintrage conventionnelle (non représentée) afin de déformer mécaniquement le tube interne 4 et le tube externe 2 de la canalisation tubulaire 1. De manière connue, un mandrin est introduit dans la cavité interne du tube interne 4 lors du cintrage. De manière avantageuse, l'organe intercalaire 3 permet de transmettre les efforts de cintrage entre le tube externe 2 et le tube interne 4, ce qui limite l'apparition de défauts de cintrage (plis, ovalisation, etc.). Grâce à l'invention, l'organe intercalaire 3 ne se déplace pas lors de l'étape de déformation, ce qui assure une déformation contrôlée et précise, limitant le risque de défaut.

## Revendications

1. Canalisation tubulaire longitudinale (1) comprenant :
- un tube externe (2) de transport de fluide ayant une portion cintrée externe (20),
- un tube interne (4) de transport de fluide, monté dans le tube externe (2), ayant une portion cintrée interne (40) sensiblement coaxiale à la portion cintrée externe (20) et
- un organe intercalaire (3), comportant un corps longitudinal flexible, qui est positionné entre la portion cintrée interne (40) et la portion cintrée externe (20) et qui s'étend de manière coaxiale auxdites portions cintrées (20, 40), l'organe intercalaire (3) étant configuré pour transmettre des efforts de cintrage entre ledit tube externe (2) et ledit tube interne (4) lorsque ledit tube externe (2) est cintré, l'organe intercalaire (3) comportant des moyens de passage de fluide longitudinal (30) entre le tube interne (4) et le tube externe (2), l'organe intercalaire (3) comportant un premier bord (3a) et un deuxième bord (3b) délimitant entre eux une fente de montage,
**canalisation caractérisée par le fait que** le premier bord (3a) et le deuxième bord (3b) comprennent respectivement au moins un premier élément de connexion (31a) et au moins un deuxième élément de connexion (31b) configurés pour coopérer mécaniquement ensemble à la périphérie extérieure du tube interne (4).

2. Canalisation tubulaire longitudinale (1) selon la revendication 1, dans laquelle, l'organe intercalaire (3) comportant une face intérieure et une face extérieure opposée à la face intérieure, le premier élément de connexion (31a) et le deuxième élément de connexion (31b) sont formés sur des faces opposées.

3. Canalisation tubulaire longitudinale (1) selon l'une des revendications précédentes, dans laquelle le premier élément de connexion (31a) comporte une première partie creuse (311a) et une première partie saillante (312a) tandis que le deuxième élément de connexion (31b) comporte une deuxième partie creuse (311b) et une deuxième partie saillante (312b) qui sont adaptées pour coopérer respectivement avec la première partie saillante (312a) et la première partie creuse (311a) du premier élément de connexion (31a).

4. Canalisation tubulaire longitudinale (1) selon la revendication précédente, dans laquelle les parties saillante (312a, 312b) de chaque élément de connexion (31a, 31b) s'étendent respectivement aux extrémités libres des bords (3a, 3b).

5. Canalisation tubulaire longitudinale (1) selon l'une des revendications précédentes, dans laquelle les bords (3a, 3b) sont longitudinaux, de préférence, rectilignes.

6. Canalisation tubulaire longitudinale (1) selon l'une des revendications précédentes, dans laquelle chaque élément de connexion (31a, 31b) se présente sous la forme d'une languette.

7. Canalisation tubulaire longitudinale (1) selon l'une des revendications précédentes, dans laquelle les moyens de passage de fluide (30) se présentent sous la forme d'orifices longitudinaux.

8. Canalisation tubulaire longitudinale (1) selon l'une des revendications précédentes, dans laquelle les moyens de passage de fluide (30) sont répartis de manière égale à la périphérie extérieure du tube interne (4).

9. Procédé de montage d'une canalisation tubulaire longitudinale (1) selon l'une des revendications 1 à 8,
- une étape de positionnement de l'organe intercalaire (3) sur une portion à cintrer (40) du tube interne (4), l'organe intercalaire (3) étant à l'état déverrouillé,
- une étape de coopération du premier élément de connexion (31a) avec le deuxième élément de connexion (31b) de manière à verrouiller l'organe intercalaire (3) sur le tube interne (4) et
- une étape d'insertion du tube interne (4) associé à l'organe intercalaire (3) dans le tube externe (2).

10. Procédé de cintrage d'une canalisation tubulaire longitudinale (1) selon l'une des revendications 1 à 8, la canalisation tubulaire longitudinale (1) comportant une portion à cintrer (10) dans laquelle est positionné l'organe intercalaire (3) entre le tube interne (4) et le tube externe (2), le procédé comportant :
- une étape de chauffage de la portion à cintrer (10) de la canalisation tubulaire (1) et
- une étape de déformation de la portion à cintrer (10) afin d'incurver la canalisation tubulaire longitudinale (1), l'organe intercalaire (3) transmettant des efforts de cintrage entre ledit tube externe (2) et ledit tube interne (4) lorsque ledit tube externe (2) est cintré.

## Patentansprüche

1. Lange Rohrleitung (1), umfassend:
- ein äußeres Rohr (2) zum Fluidtransport mit einem äußeren gebogenen Abschnitt (20),
- ein inneres Rohr (4) zum Fluidtransport, das in dem äußeren Rohr (2) angebracht ist, mit einem inneren gebogenen Abschnitt (40), der etwa koaxial zum äußeren gebogenen Abschnitt (20) ist, und
- ein Trennelement (3), aufweisend einen flexiblen langen Körper, das zwischen dem inneren gebogenen Abschnitt (40) und dem äußeren gebogenen Abschnitt (20) positioniert ist und das sich koaxial zu den gebogenen Abschnitten (20, 40) erstreckt, wobei das Trennelement (3) konfiguriert ist, um Biegekräfte zwischen dem äußeren Rohr (2) und dem inneren Rohr (4) zu übertragen, wenn das äußere Rohr (2) gebogen wird, wobei das Trennelement (3) lange Fluiddurchgangsmittel (30) zwischen dem inneren Rohr (4) und dem äußeren Rohr (2) aufweist, wobei das Trennelement (3) einen ersten Rand (3a) und einen zweiten Rand (3b) aufweist, die zwischen sich einen Montageschlitz begrenzen,
wobei die Rohrleitung **dadurch gekennzeichnet ist, dass** der erste Rand (3a) und der zweite Rand (3b) jeweils mindestens ein erstes Verbindungselement (31a) und mindestens ein zweites Verbindungselement (31b) umfassen, die konfiguriert sind, um an der äußeren Peripherie des inneren Rohrs (4) gemeinsam mechanisch zusammenzuwirken.

2. Lange Rohrleitung (1) nach Anspruch 1, wobei, wobei das Trennelement (3) eine innere Fläche und eine äußere Fläche aufweist, die der inneren Fläche gegenüberliegt, das erste Verbindungselement (31a) und das zweite Verbindungselement (31b) auf gegenüberliegenden Flächen ausgebildet sind.

3. Lange Rohrleitung (1) nach einem der vorangehenden Ansprüche, wobei das erste Verbindungselement (31a) einen ersten hohlen Teil (311a) und eine ersten hervorstehenden Teil (312a) aufweist, wohingegen das zweite Verbindungselement (31b) einen zweiten hohlen Teil (311b) und einen zweiten hervorstehenden Teil (312b) aufweist, die ausgebildet sind, um jeweils mit dem ersten hervorstehenden Teil (312a) und dem ersten hohlen Teil (311a) des ersten Verbindungselements (31a) zusammenzuwirken.

4. Lange Rohrleitung (1) nach vorangehendem Anspruch, wobei sich die hervorstehenden Teile (312a, 312b) jedes Verbindungselements (31a, 31b) jeweils an den freien Enden der Ränder (3a, 3b) erstrecken.

5. Lange Rohrleitung (1) nach einem der vorangehenden Ansprüche, wobei die Ränder (3a, 3b) längs, vorzugweise gerade, sind.

6. Lange Rohrleitung (1) nach einem der vorangehenden Ansprüche, wobei jedes Verbindungselement (31a, 31b) in Form einer Zunge vorliegt.

7. Lange Rohrleitung (1) nach einem der vorangehenden Ansprüche, wobei die Fluiddurchgangsmittel (30) in Form von langen Löchern vorliegen.

8. Lange Rohrleitung (1) nach einem der vorangehenden Ansprüche, wobei die Fluiddurchgangsmittel (30) am äußeren Umfang des inneren Rohrs (4) gleich verteilt sind.

9. Montageverfahren einer langen Rohrleitung (1) nach einem der Ansprüche 1 bis 8,
- einen Schritt des Positionierens des Trennelements (3) auf einem zu biegenden Abschnitt (40) des inneren Rohrs (4), wobei das Trennelement (3) im entriegelten Zustand ist,
- einen Schritt des Zusammenwirkens des ersten Verbindungselements (31a) mit dem zweiten Verbindungselement (31b) derart, dass das Trennelement (3) auf dem inneren Rohr (4) verriegelt wird, und
- einen Schritt des Einsetzens des inneren Rohrs (4), das dem Trennelement (3) zugeordnet ist, in das äußere Rohr (2).

10. Biegeverfahren einer langen Rohrleitung (1) nach einem der Ansprüche 1 bis 8, wobei die lange Rohrleitung (1) einen zu biegenden Abschnitt (10) aufweist, in dem das Trennelement (3) zwischen dem inneren Rohr (4) und dem äußeres Rohr (2) positioniert ist, wobei das Verfahren aufweist:
- einen Schritt des Erwärmens des zu biegenden Abschnitts (10) der Rohrleitung (1), und
- einen Schritt des Verformens des zu biegenden Abschnitts (10), um die lange Rohrleitung (1) zu krümmen, wobei das Trennelement (3) Biegekräfte zwischen dem äußeren Rohr (2) und dem inneren Rohr (4) überträgt, wenn das äußere Rohr (2) gebogen wird.

## Claims

1. Longitudinal tubular pipe (1) comprising:
- a fluid transporting outer tube (2) having an outer bent portion (20),
- a fluid transporting inner tube (4), mounted in the outer tube (2), having an inner bent portion (40) substantially coaxial to the outer bent portion (20) and
- a separating member (3), comprising a flexible longitudinal body, which is positioned between the inner bent portion (40) and the outer bent portion (20) and which extends coaxially to said bent portions (20, 40), the separating member (3) being configured to transmit bending forces between said outer tube (2) and said inner tube (4) when said outer tube (2) is bent, the separating member (3) comprising longitudinal fluid passage means (30) between the inner tube (4) and the outer tube (2), the separating member (3) comprising a first edge (3a) and a second edge (3b) delimiting between them a mounting slot,
**pipe characterised by the fact that** the first edge (3a) and the second edge (3b) respectively comprise at least one first connecting element (31a) and at least one second connecting element (31b) configured to cooperate mechanically together at the outer periphery of the inner tube (4).

2. Longitudinal tubular pipe (1) according to claim 1, wherein, the separating member (3) comprising an inner face and an outer face opposite to the inner face, the first connecting element (31a) and the second connecting element (31b) are formed on opposite faces.

3. Longitudinal tubular pipe (1) according to one of the preceding claims, wherein the first connecting element (31a) comprises a first hollow part (311a) and a first projecting part (312a) whereas the second connecting element (31b) comprises a second hollow part (311b) and a second projecting part (312b) which are suited to cooperate respectively with the first projecting part (312a) and the first hollow part (311a) of the first connecting element (31a).

4. Longitudinal tubular pipe (1) according to the preceding claim, wherein the projecting parts (312a, 312b) of each connecting element (31a, 31b) extend respectively to the free ends of the edges (3a, 3b).

5. Longitudinal tubular pipe (1) according to one of the preceding claims, wherein the edges (3a, 3b) are longitudinal, preferably, rectilinear.

6. Longitudinal tubular pipe (1) according to one of the preceding claims, wherein each connecting element (31a, 31b) is in the form of a tongue.

7. Longitudinal tubular pipe (1) according to one of the preceding claims, wherein the fluid passage means (30) are in the form of longitudinal orifices.

8. Longitudinal tubular pipe (1) according to one of the preceding claims, wherein the fluid passage means (30) are distributed equally at the outer periphery of the inner tube (4).

9. Method for mounting a longitudinal tubular pipe (1) according to one of claims 1 to 8,
- a step of positioning the separating member (3) on a portion to bend (40) of the inner tube (4), the separating member (3) being in the unlocked state,
- a step of cooperation of the first connecting element (31a) with the second connecting element (31b) so as to lock the separating member (3) on the inner tube (4) and
- a step of inserting the inner tube (4) associated with the separating member (3) into the outer tube (2).

10. Method for bending a longitudinal tubular pipe (1) according to one of claims 1 to 8, the longitudinal tubular pipe (1) comprising a portion to bend (10) wherein is positioned the separating member (3) between the inner tube (4) and the outer tube (2), the method comprising:
- a step of heating the portion to bend (10) of the tubular pipe (1) and
- a step of deforming the portion to bend (10) in order to bend the longitudinal tubular pipe (1) into a curve, the separating member (3) transmitting bending forces between said outer tube (2) and said inner tube (4) when said outer tube (2) is bent.
